# EUROPÄISCHE PATENTANMELDUNG

(11) **EP 2 416 131 A1**
(43) Veröffentlichungstag der Anmeldung: **08.02.2012**
(21) Anmeldenummer: 10171991.2
(22) Anmeldetag: 05.08.2010
(51) Int. Cl.: G01G 21/28, G01G 21/30

(54) **Gehäuse zur Aufnahme von elektronischen Bauteilen einer Waage**

(71) Anmelder: Mettler-Toledo (Albstadt) GmbH, 72458 Albstadt (DE)
(72) Erfinder: Schoen, Thomas, 72336, Balingen (DE)
(74) Vertreter: Mettler-Toledo

(57) **Zusammenfassung**

Die Erfindung betrifft ein Gehäuse (1) zur Aufnahme von elektronischer Bauteile (2) für die Steuerung einer Waage, wobei das Gehäuse (1) einen ersten Gehäuseteil (10) und einen zweiten Gehäuseteil (30) aufweist und das erste Gehäuseteil (10) und das zweite Gehäuseteil (30) derart ausgestaltet sind, dass zwischen dem ersten Gehäuseteil (10) und dem zweiten Gehäuseteil (30) ein erster abgeschlossener Raum (6) zur Aufnahme der elektronischen Bauteile (2) gebildet ist. Dabei ist zwischen dem ersten Gehäuseteil (10) und dem zweiten Gehäuseteil (30) ein Befestigungsmodul (60) angeordnet und das Befestigungsmodul (60) weist eine erste Seite (61) und eine der ersten Seite gegenüberliegende zweite Seite (62) auf. Ausserdem weist die erste Seite (61) einen ersten umlaufenden Aufnahmebereich (63) zur Aufnahme des ersten Gehäuseteils (10) und die zweite Seite (62) einen zweiten umlaufenden Aufnahmebereich (64) zur Aufnahme des zweiten Gehäuseteils (30) auf.

## Beschreibung

Die vorliegende Erfindung bezieht sich auf ein Gehäuse zur Aufnahme von elektronischen Bauteilen einer Waage, die hauptsächlich in der Lebensmittelindustrie zum Einsatz kommt. Die im Gehäuse aufgenommenen elektronischen Bauteile dienen neben dem Betrieb der Waage beispielsweise der Steuerung einer Anzeige- und Bedieneinheit der Waage. Das Gehäuse weist in der Regel einen ersten Gehäuseteil und einen zweiten Gehäuseteil auf. Das erste Gehäuseteil und das zweite Gehäuseteil wirken derart zusammen, dass zwischen dem ersten Gehäuseteil und dem zweiten Gehäuseteil ein abgeschlossener Raum zur Aufnahme von elektronischen Bauteilen gebildet ist. Zwischen dem ersten und zweiten Gehäuseteil ist eine Dichtung angeordnet, die verhindert dass Stoffe in das Innere des Gehäuses eindringen können.

An Waagen und deren Peripherigeräte, die in der Lebensmittelindustrie eingesetzt werden, werden hohe Anforderungen an die Reinigbarkeit und die damit verbundene Hygienesicherheit gestellt. Ein typischer Einsatzort dieser Waagen ist in der Produktion von Lebensmitteln. In dieser Umgebung kommen die Waage und das Gehäuse zur Aufnahme von elektronischen Bauteilen in direkten Kontakt mit den Lebensmitteln. Für die Reinigung dieser Waagen werden unter anderem Hochdruckreiniger verwendet. Es muss sicher gestellt werden, dass das Gehäuse während des Reinigungsvorgangs dicht ist und beispielsweise keine Verunreinigungen in das Gehäuse der Waagenanzeige eindringen können, da ansonsten die elektronischen Bauteile im Innern des Gehäuses beschädigt werden können. Mit aus Edelstahl gefertigten Gehäuseteilen und einer zwischen diesen Gehäuseteilen angeordneten Dichtung, kann diese Bedingung erfüllt werden. Die Fertigung eines Edelstahlgehäuses unterliegt jedoch fertigungsbedingter Einschränkungen. Auf Grund dieser Einschränkungen weist das Gehäuse ein relativ grosses Volumen auf und die Wahl der Form des Gehäuses ist eingeschränkt. Ein weiterer Nachteil kann darin bestehen, dass die Dichtung zwischen zwei Edelstahlelementen für Beschädigungen anfällig sein kann. Besonders beim Öffnen des Gehäuses zu Wartungszwecken könnte die Dichtung beschädigt werden. In Folge dessen könnte das Gehäuse nach der Durchführung einer Wartung nicht mehr dicht sein. Auf Grund des undichten Gehäuses könnte während des Reinigungsprozesses Wasser oder Reinigungsmittel in das Gehäuse eindringen und die elektronischen Bauteile beschädigen.

Es ist somit Aufgabe der vorliegenden Erfindung ein Gehäuse für elektronische Bauteile zu schaffen, das eine kompakte Form bei einer zuverlässigen Abdichtung aufweist.

Diese Aufgabe wird durch ein Gehäuse gelöst, welches die im unabhängigen Patentanspruch angegebenen Merkmale aufweist. Weitere vorteilhafte Ausführungsformen können den abhängigen Ansprüchen entnommen werden.

Das erfindungsgemässe Gehäuse zur Aufnahme elektronischer Bauteile für die Steuerung einer Waage, weist ein erstes Gehäuseteil und ein zweites Gehäuseteil auf. Das erste Gehäuseteil und das zweite Gehäuseteil sind derart ausgestaltet, dass zwischen dem ersten Gehäuseteil und dem zweiten Gehäuseteil ein erster abgeschlossener Raum zur Aufnahme von elektronischen Bauteilen gebildet ist. Zwischen dem ersten Gehäuseteil und dem zweiten Gehäuseteil ist ein Befestigungsmodul angeordnet und das Befestigungsmodul weist eine erste Seite und eine der ersten Seite gegenüberliegende zweite Seite auf. Die erste Seite weist einen ersten umlaufenden Aufnahmebereich zur Aufnahme des ersten Gehäuseteils auf. Die zweite Seite weist einen zweiten umlaufenden Aufnahmebereich zur Aufnahme des zweiten Gehäuseteils auf.

Die Form der Gehäuseteile und des Befestigungsmoduls muss dabei so gewählt werden, dass durch die beiden Gehäuseteile und das Befestigungsmodul ein abgeschlossener Raum zur Aufnahme von elektronischen Bauteilen gebildet wird.

Das Befestigungsmodul fungiert auch als Zwischenstück beziehungsweise Adapter zwischen dem ersten und dem zweiten Gehäuseteil. Die beiden Gehäuseteile kommen nicht in direkten Kontakt miteinander. Die Dichtung zwischen den Gehäuseteilen und dem Befestigungsmodul kann flexibler gestaltet werden. Dies bietet den Vorteil, dass die beiden Gehäuseteile weniger stark aufeinander abgestimmt sein müssen. Dadurch stehen mehr Ausgestaltungsmöglichkeiten der beiden Gehäuseteile zur Verfügung. Insbesondere wird eine kompaktere Ausführung der Anzeige- und Bedieneinheit ermöglicht.

Vorteilhafterweise wirkt der erste umlaufende Aufnahmebereich formschlüssig mit dem ersten Gehäuseteil zusammen. Das erste Gehäuseteil weist beispielsweise eine im Wesentlichen plane Fläche auf. In diese plane Fläche ist die Anzeige- und Bedieneinheit eingebettet. Die Anzeige- und Bedieneinheit ist vorzugsweise ebenfalls im Wesentlichen plan. Der erste umlaufende Aufnahmebereich weist eine ebenfalls im Wesentlichen plane Fläche auf, die mit der planen Fläche des ersten Gehäuseteils formschlüssig zusammenwirkt. Auf diese Weise kann verhindert werden, dass Verunreinigungen zwischen dem ersten Gehäuseteil und dem Befestigungsmodul in das Innere des Gehäuses gelangen können.

Das Befestigungsmodul kann mit mindestens einem Befestigungsmittel lösbar mit dem ersten Gehäuseteil verbunden sein. Ein geeignetes Befestigungsmittel ist beispielsweise eine Schraube. Es besteht auch die Möglichkeit das Befestigungsmittel nicht lösbar mit dem ersten Gehäuseteil, beispielsweise mit einem Klebstoff, zu verbinden. Es ist auch möglich die beiden Teile durch Pressen zu verbinden. Ausserdem besteht die Möglichkeit eine werkzeuglos lösbare Verbindung, wie beispielsweise Clips oder Rasten, zu verwenden.

Idealerweise weist der zweite umlaufende Aufnahmebereich eine umlaufende Nut zur Aufnahme einer umlaufenden Gehäuseteilkante des zweiten Gehäuseteils auf. Zur zusätzlichen Abdichtung kann zwischen der Nut und der Gehäuseteilkante eine Dichtung eingebracht werden. Vorteilhaft ist eine feste Verbindung der Dichtung mit dem zweiten Gehäuseteil. Dazu kann beispielsweise flüssiges Dichtmaterial in die Nut eingebracht werden, wo es aushärtet. Es ist jedoch auch die Verwendung einer Dichtung möglich, die nicht fest mit dem Gehäuseteil verbunden ist. Dazu wird beispielsweise eine Normdichtung und/oder eine Rundschnur verwendet.

In einer möglichen Ausführungsform ist das zweite Gehäuseteil haubenförmig ausgestaltet und an das Befestigungsmodul ist eine umlaufende Tennwand angeformt. Die Trennwand ist durch eine umlaufende Kante begrenzt. Die umlaufende Kante der Trennwand wirkt im geschlossenen Zustand des Gehäuses derart mit einer Innenseite des haubenförmigen zweiten Gehäuseteils zusammen, dass im Innern des ersten geschlossenen Raums ein zweiter geschlossener Raum zur Aufnahme von elektronischen Bauteilen gebildet ist. Der zweite Raum ist somit eine Teilmenge des ersten Raums. Der zweite Raum wird durch das Befestigungsmodul und einen Teil des haubenförmigen zweiten Gehäuseteils begrenzt. Der zweite Raum ist ringförmig von einem Teil des ersten Raums umgeben. Der umgebende ringförmige Teil liegt wie eine Pufferzone um den zweiten Raum. In diesem ringförmigen Teil sollten keine empfindlichen elektronischen Bauteile angeordnet werden.

Diese Ausgestaltung bietet den Vorteil, dass der zweite geschlossene Raum durch den ihn umgebenden Teil des ersten Raums zusätzlich vor dem Eindringen von Verunreinigungen geschützt ist. Die im zweiten Raum angeordneten elektronischen Bauteile werden auf diese Weise vor mechanischen und chemischen Einflüssen geschützt.

Durch das Anordnen einer Dichtung zwischen der umlaufenden Kante der Trennwand und dem zweiten Gehäuseteil wird zusätzlich das Eindringen von Verunreinigungen in den zweiten Raum verhindert. Selbst wenn durch Umgebungseinflüsse die erste, äussere Dichtung beschädigt werden sollte, schützt die zweite, innere Dichtung die elektronischen Bauteile vor Umgebungseinflüssen.

Durch die Verwendung der ersten und der zweiten Dichtung erhöht sich die Wahrscheinlichkeit, dass das Gehäuse nach dem Öffnen immer noch dicht ist, da eine gleichzeitige Beschädigung der ersten und zweiten Dichtung unwahrscheinlicher ist. Ausserdem schützt die erste Dichtung die zweite Dichtung vor Umgebungseinflüssen. Selbst wenn die erste Dichtung teilweise beschädigt ist, bietet sie der zweiten Dichtung einen Schutz vor Umgebungseinflüssen, insbesondere während des abrasiven Reinigungsvorgangs.

Durch die Verwendung der ersten und zweiten Dichtung werden an die erste Dichtung weniger hohe Anforderungen gestellt, da zusätzlich die zweite Dichtung zur Verfügung steht. Dadurch werden auch an die Befestigung des zweiten Gehäuseteils am Verbindungsmodul weniger hohe Anforderungen gestellt. Dadurch kann das zweite Gehäuseteil weniger aufwändig am Verbindungsmodul befestigt werden, was den Vorteil hat, dass das zweite Gehäuseteil auch mit weniger Aufwand entfernt und wieder befestigt werden kann. Dies bietet den Vorteil, dass das Gehäuse für Wartungszwecke schneller geöffnet und wieder verschlossen werden kann.

Vorteilhafterweise ist das Befestigungsmodul im Wesentlichen aus Kunststoff gefertigt ist. Die Fertigung aus Kunststoff bietet den Vorteil der einfachen und kostengünstigen Fertigung. Kunststoff bietet ausserdem den Vorteil, dass auf einfache Weise sehr komplexe Formen hergestellt werden können. Aus diesem Grund sind bei der Wahl der Form des Befestigungsmoduls viele Möglichkeiten gegeben. Insbesondere kann die Form des Befestigungsmoduls einfach an die Form der beiden Gehäuseteile angepasst werden.

In einer vorteilhaften Ausführungsform sind das erste Gehäuseteil und das zweite Gehäuseteil im Wesentlichen aus Metall, insbesondere Chromstahl, gefertigt. Metall bietet den Vorteil, dass er einfach gereinigt werden kann, hat jedoch den Nachteil, dass die Herstellung komplexer Formen aufwändig ist.

Die Gehäuseteile können durch Schweissen hergestellt werden. Eher ungünstig ist hierbei jedoch, dass sich an den Schweissnähten Verunreinigungen ablagern können.

Idealerweise sind das erste Gehäuseteil und/oder das zweite Gehäuseteil einstückig gefertigt. Auch eine nahtlose Fertigung des ersten und/oder zweiten Gehäuseteils ist vorteilhaft. Dadurch können Ablagerungen an den Nähten verhindert werden. Das nahtlose Gehäuse kann beispielsweise durch Tiefziehen hergestellt werden.

An die in der Lebensmittelindustrie verwendeten Gehäuse werden hohe Anforderungen an die Reinigbarkeit gestellt. Darum sollten an den Ecken und Kanten möglichst grosse Radien, idealerweise grösser als 6 mm, verwendet werden. Das Gehäuse sollte keine Schlitze oder Spalten aufweisen. Falls die Gehäuseteile gegossen werden, sollte sicher gestellt werden, dass keine Lunker gebildet werden. Auch Hinterschneidungen sollten vermieden werden.

In einer bevorzugten Ausführungsform ist das zweite Gehäuseteil fest mit einem vertikal ausgerichteten Ständer verbunden und im geöffneten Zustand des Gehäuses ist das erste Gehäuseteil mit Hilfe eines Haltemoduls lösbar mit dem zweiten Gehäuseteil verbunden. Wird das Gehäuse geöffnet, hängt das erste Gehäuseteil durch das Haltemodul verbunden am zweiten Gehäuseteil. Würde kein Haltemodul verwendet, würde das erste Gehäuseteil evtl. an elektrischen Kabeln hängen, die am zweiten Gehäuseteil angeordneten elektronische Bauteile mit der Anzeige- und Bedieneinheit verbinden. Dadurch könnten die elektrischen Kabel oder die elektronischen Bauteile beschädigt werden. Die Verwendung des Haltemoduls bietet den Vorteil, dass bei der Wartung der elektronischen Bauteile das erste Gehäuseteil nicht vollständig entfernt werden muss und immer noch am zweiten Gehäuseteil hängt ohne dass die elektrischen Kabel oder die elektronischen Bauteile beschädigt werden.

Es ist möglich das Haltemodul aus mindestens einem flexiblen Material zu fertigen, der sowohl am ersten als auch am zweiten Gehäuseteil befestigt ist. Das flexible Material kann beispielsweise Kunststoff, Metall oder aus textiler Werkstoff sein. Das Haltemodul kann einen metallischen Draht, ein textiles Band oder Kunststoffelement aufweisen. Als Befestigungsmittel des Haltemoduls am ersten und/oder zweiten Gehäuseteil kommen beispielsweise Schrauben in Betracht. Es ist jedoch vorteilhaft zumindest zur Befestigung am ersten oder zweiten Gehäuseteil ein werkzeuglos lösbares Befestigungsmittel zu verwenden, da dadurch die Gehäuseteile im Bedarfsfall einfach und schnell von einander getrennt werden können.

Das Haltemodul weist ein Verbindungselement mit einer Öse und einen mit der Öse zusammenwirkenden Zapfen auf. Das Verbindungselement ist an dem ersten Gehäuseteil und der Zapfen am zweiten Gehäuseteil fixiert. Es sind jedoch auch andere Ausgestaltungen des Verbindungselements denkbar.

Eine bevorzugte Ausführungsform des erfindungsgemässen Gehäuses wird schematisch in den Zeichnungen dargestellt sind und im Folgenden beschrieben. Es zeigen
- Figur 1: eine Waage mit dem erfindungsgemässen Gehäuse der Anzeige- und Bedieneinheit zur Aufnahme von elektronischen Bauteilen;
- Figur 2: eine perspektivische Ansicht des erfindungsgemässen Gehäuses;
- Figur 3: eine Draufsicht des erfindungsgemässen Gehäuses;
- Figur 4: einen Schnitt durch das erfindungsgemässe Gehäuse;
- Figur 5: einen Ausschnitt eines Schnitts durch das erfindungsgemässe Gehäuse;
- Figur 6: eine Waage mit dem erfindungsgemässen Gehäuse der Anzeige- und Bedieneinheit im geöffneten Zustand;
- Figur 7: eine Teilansicht des Verbindungselements im befestigtem Zustand und
- Figur 8: eine Teilansicht des Verbindungselements im gelösten Zustand.

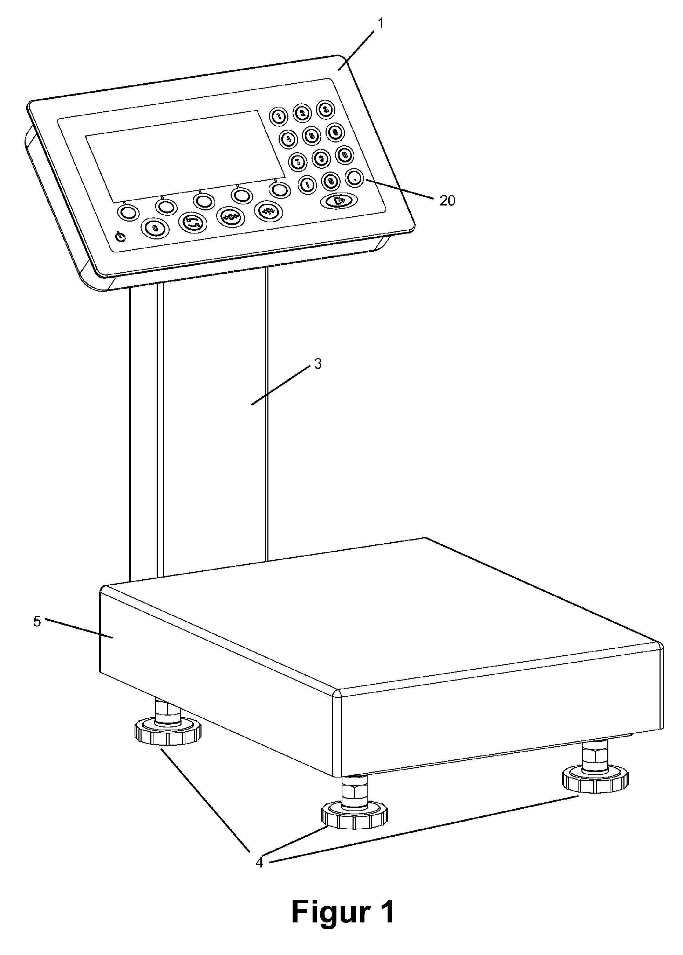

Figur 1 zeigt eine Waage mit einer Wägeplattform 5. Die Wägeplattform 5 ist auf vier Füssen 4 gelagert. Die Anzeige- und Bedieneinheit 20 ist in das erfindungsgemässe Gehäuse 1 eingebettet. Das Gehäuse 1 ist mittels eines Ständers 3 mit der Wägeplattform 5 verbunden.

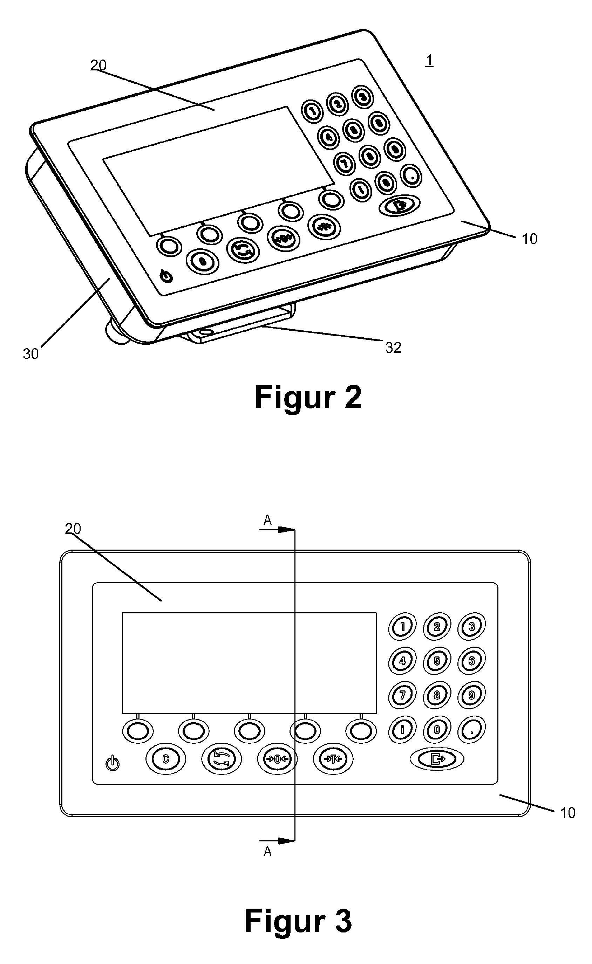

Figur 2 zeigt eine perspektivische Ansicht des erfindungsgemässen Gehäuses 1 mit einem ersten Gehäuseteil 10 und einem zweiten Gehäuseteil 30. In dem ersten Gehäuseteil 10 ist die Anzeige- und Bedieneinheit 30 eingebettet. Das erste Gehäuseteil 10 und die eingebettete Anzeige- und Bedieneinheit 30 sind im Wesentlichen plan. Das erste Gehäuseteil 10 ist im geschlossenen Zustand mit dem zweiten Gehäuseteil 30 verbunden. Das zweite Gehäuseteil 30 ist haubenförmig. Das erste Gehäuseteil 10 und das zweite Gehäuseteil 30 sind aus Metall, vorzugsweise korrosionsfreiem Edelstahl gefertigt. Das haubenförmige zweite Gehäuseteil 30 ist nahtlos ausgebildet. Es kann beispielsweise durch Tiefziehen hergestellt werden. An dem zweiten Gehäuseteil 30 ist Verbindungselement 32 zum Ständer 3 angeordnet.

Figur 3 zeigt eine Draufsicht des erfindungsgemässen Gehäuses 1. Es sind das erste Gehäuseteil 10 und die Anzeige- und Bedieneinheit 30 sichtbar.

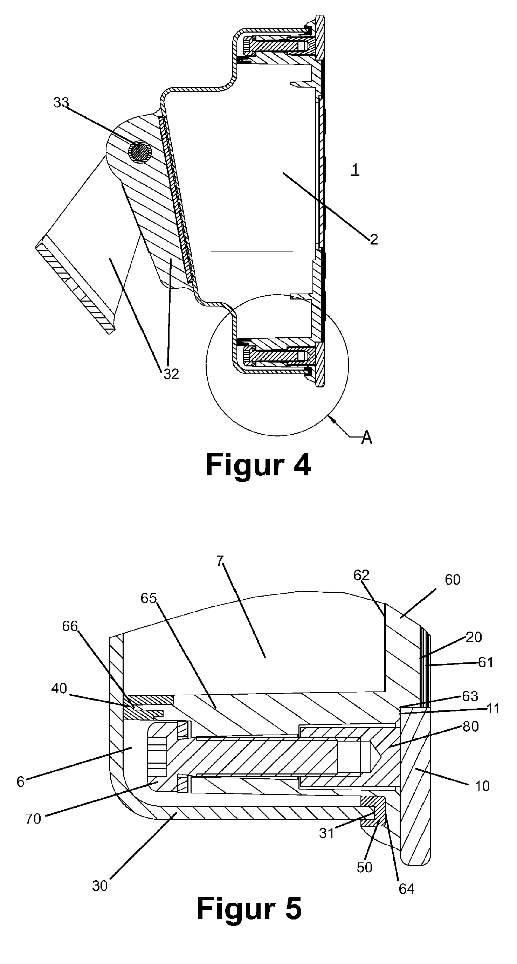

Figur 4 zeigt einen Schnitt entlang des in Figur 3 dargestellten Schnitts A-A durch das erfindungsgemässe Gehäuse 1. Das Verbindungselement des Ständers 32 besteht aus zwei Teilen, die rotierbar um ein drehbares Lager 33 gelagert sind. Ein Teil des Verbindungselements des Ständers 32 ist mit dem Gehäuse 1 verbunden und das andere Teil des Verbindungselements des Ständers 32 ist mit dem Ständer 3 verbunden. Im Innern des Gehäuses 1 sind elektronische Bauteile 2 angeordnet. Die elektronischen Bauteile 2 dienen beispielsweise der Steuerung der Anzeige- und Bedieneinheit 20 und der Steuerung der Waage 1.

Figur 5 zeigt den in Figur 4 dargestellten Ausschnitt A eines Schnitts durch das erfindungsgemässe Gehäuse 1. Die Hauptkomponenten des erfindungsgemässen Gehäuses sind ein erstes Gehäuseteil 10, ein zweites Gehäuseteil 30 und ein Befestigungsmodul 60. Das Befestigungsmodul 60 weist eine erste Seite 61 und eine der ersten Seite 61 gegenüberliegende zweite Seite 62 auf. An der ersten Seite 61 ist das erste Gehäuseteil 10 und an der zweiten Seite 62 ist das zweite Gehäuseteil 30 angeordnet. Die beiden Gehäuseteile 10, 30 wirken derart mit dem Befestigungsmodul 60 zusammen, dass im Innern der Gehäuseteile 10, 30 ein nach aussen abgeschlossener erster Raum 6 zur Aufnahme von elektronischen Bauteilen gebildet wird.

In das plane erste Gehäuseteil 10 ist eine ebenfalls plane Anzeige- und Bedieneinheit 20 eingebettet. Die Anzeige- und Bedieneinheit 20 dient beispielsweise der Anzeige der Wägeresultate und der Bedienung der Waage. Am ersten Gehäuseteil 10 sind mehrere Gewindehülsen 80 angebracht. In die Gewindehülsen 80 werden Schrauben 70 eingebracht. Mittels der Schrauben 70 wird das Befestigungsmodul 60 mit dem ersten Gehäuseteil 10 verbunden. Das erste Gehäuseteil 10 weist einem umlaufenden Aufnahmebereich 11 auf, der formschlüssig mit einem ersten umlaufenden Aufnahmebereich des Befestigungsmoduls 63 zusammenwirkt. Das erste Gehäuseteil 10 und das Befestigungsmodul 60 wirken über eine grosse Fläche formschlüssig zusammen. Dadurch wird eine gute Abdichtung nach aussen erreicht und es ist keine zusätzliche Dichtung notwendig.

An der ersten Seite 61 ist ein erster umlaufender Aufnahmebereich 63 und auf der zweiten Seite 62 ein zweiter umlaufender Aufnahmebereich 64 angeordnet. Der zweite Aufnahmebereich 64 wirkt mit einem umlaufenden Aufnahmebereich des zweiten Gehäuseteils 31 zusammen. Der zweite Aufnahmebereich des Befestigungsmoduls 64 ist eine Nut, die mit der Gehäuseteilkante des zweiten Gehäuses 31 zusammenwirkt. Die Gehäuseteilkante ist somit der Aufnahmebereich des zweiten Gehäuseteils 31. Zur zusätzlichen Abdichtung kann zwischen der Gehäuseteilkante und der Nut eine erste Dichtung 50 eingebracht werden.

Der zweite Gehäuseteil 30 ist haubenförmig ausgestaltet. Zwischen dem ersten Gehäuseteil 10, das plan ausgebildet ist, und dem zweiten Gehäuseteil 30 wird ein erster geschlossener Raum 6 gebildet.

Zur zusätzlichen Abdichtung wird innerhalb des ersten geschlossenen Raums 6 ein zweiter geschlossener Raum 7 gebildet. Zur Bildung des zweiten geschlossenen Raums 7 ist am Befestigungsmodul 60 eine umlaufende Trennwand 65 angeordnet. Die Trennwand 65 weist eine umlaufende Kante 66 auf, die mit der Innenwand des haubenförmigen zweiten Gehäuseteils 30 zusammenwirkt. Zur zusätzlichen Abdichtung kann zwischen der umlaufenden Kante 66 und dem haubenförmigen zweiten Gehäuseteil 30 eine zweite Dichtung 40 angebracht werden.

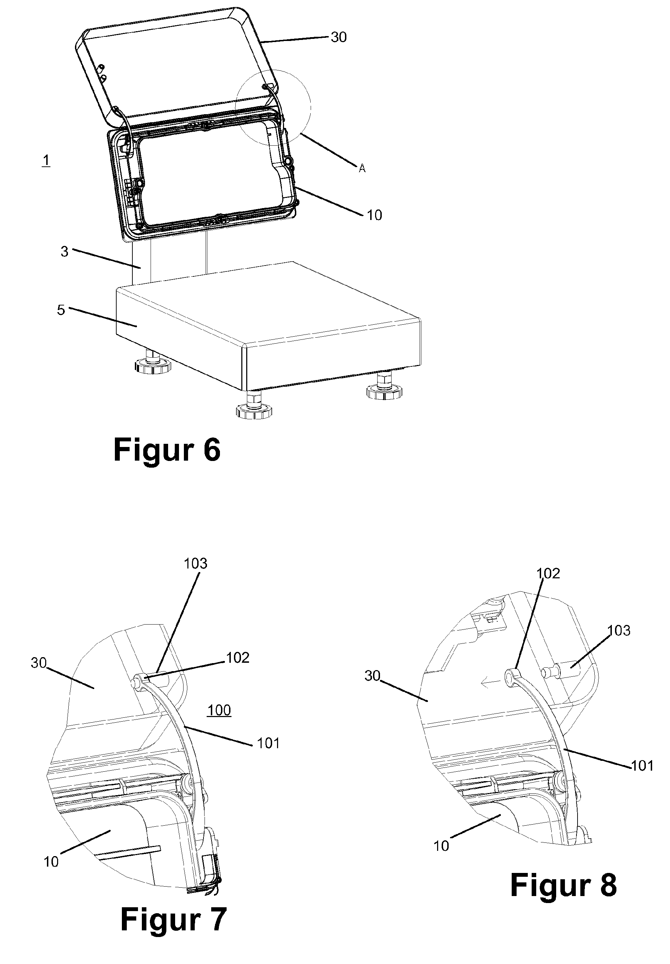

Figur 6 zeigt eine Waage mit dem erfindungsgemässen Gehäuse 1 der Anzeige- und Bedieneinheit im geöffneten Zustand. Die Waage weist eine Wägeplattform 5 und einen Ständer 3 auf. Der Ständer 3 verbindet die Wägeplattform 5 mit dem Gehäuse 1 der Anzeige- und Bedieneinheit.

Figur 7 zeigt den Ausschnitt A aus der Figur 6. Das Halteelement 100 hält im geöffneten Zustand des Gehäuses 1 das erste Gehäuseteil 10 am zweiten Gehäuseteil 30. Das Haltelement 100 weist ein Verbindungselement 101, eine Öse 102 und einen Zapfen 103 auf. Das Verbindungselement 101 weist zwei Enden auf, wobei das erste Ende fest mit dem ersten Gehäuseteil 10 verbunden ist und an das zweite Ende der Öse 102 angeordnet ist. Der Zapfen 103 ist fest mit dem zweiten Gehäuseteil 30 verbunden. Die Öse 102 kann auf den Zapfen 103 gesteckt werden. Dadurch wird der erste Gehäuseteil 10 am zweiten Gehäuseteil 30 mit dem Verbindungselement 101 gehalten.

Zum Lösen des ersten Gehäuseteils 10 vom zweiten Gehäuseteil 30 kann, wie in Figur 8 dargestellt, die Öse 102 vom Zapfen 103 gelöst werden.

Idealerweise ist das Halteelement 100 teilweise oder komplett aus Kunststoff gefertigt. Das Verbindungselement 101 ist bevorzugterweise aus einem flexiblen Material gefertigt.

Obwohl die Erfindung durch die Darstellung eines spezifischen Ausführungsbeispiels beschrieben worden ist, ist es offensichtlich, dass zahlreiche weitere Ausführungsvarianten in Kenntnis der vorliegenden Erfindung geschaffen werden können.

### Bezugszeichenliste

- 1: Gehäuse
- 2: Elektronische Bauteile
- 3: Ständer
- 5: Wägeplattform
- 6: erster abgeschlossener Raum
- 7: Zweiter geschlossener Raum
- 10: Erstes Gehäuseteil
- 11: Aufnahmebereich des ersten Gehäuseteils
- 20: Anzeige- und Bedieneinheit
- 30: Zweites Gehäuseteil
- 31: Aufnahmebereich des zweiten Gehäuseteils
- 32: Verbindungselement des Ständers
- 40: Zweite Dichtung
- 50: Erste Dichtung
- 60: Befestigungsmodul
- 61: Erste Seite des Befestigungsmoduls
- 62: Zweite Seite des Befestigungsmoduls
- 63: Erster Aufnahmebereich des Befestigungsmoduls
- 64: Zweiter Aufnahmebereich des Befestigungsmoduls
- 65: Trennwand
- 66: Kante
- 70: Schraube
- 80: Gewindehülse
- 100: Haltemodul
- 101: Verbindungselement
- 102: Öse
- 103: Zapfen

## Patentansprüche

1. Gehäuse (1) zur Aufnahme von elektronischer Bauteile (2) für die Steuerung einer Waage, wobei das Gehäuse (1) einen ersten Gehäuseteil (10) und einen zweiten Gehäuseteil (30) aufweist und das erste Gehäuseteil (10) und das zweite Gehäuseteil (30) derart ausgestaltet sind, dass zwischen dem ersten Gehäuseteil (10) und dem zweiten Gehäuseteil (30) ein erster abgeschlossener Raum (6) zur Aufnahme der elektronischen Bauteile (2) gebildet ist, **dadurch gekennzeichnet, dass** zwischen dem ersten Gehäuseteil (10) und dem zweiten Gehäuseteil (30) ein Befestigungsmodul (60) angeordnet ist und das Befestigungsmodul (60) eine erste Seite (61) und eine der ersten Seite gegenüberliegende zweite Seite (62) aufweist und die erste Seite (61) einen ersten umlaufenden Aufnahmebereich (63) zur Aufnahme des ersten Gehäuseteils (10) und die zweite Seite (62) einen zweiten umlaufenden Aufnahmebereich (64) zur Aufnahme des zweiten Gehäuseteils (30) aufweist.

2. Gehäuse (1) nach Anspruch 1, **dadurch gekennzeichnet, dass** der erste umlaufende Aufnahmebereich (63) formschlüssig mit dem ersten Gehäuseteil (30) zusammenwirkt.

3. Gehäuse (1) nach Anspruch 1 oder 2, **dadurch gekennzeichnet, dass** der zweite umlaufende Aufnahmebereich (64) eine umlaufende geschlossene Nut zur Aufnahme einer umlaufenden Gehäuseteilkante (31) des zweiten Gehäuseteils (30) aufweist.

4. Gehäuse (1) nach Anspruch 3, **dadurch gekennzeichnet, dass** zwischen der umlaufenden Gehäuseteilkante (31) und der umlaufenden Nut eine umlaufende erste Dichtung (50) angeordnet ist.

5. Gehäuse (1) nach einem der vorangehenden Ansprüche, **dadurch gekennzeichnet, dass** der zweite Gehäuseteil (30) haubenförmig ausgestaltet ist und an das Befestigungsmodul (60) eine umlaufende Tennwand (65) angeformt ist, die durch eine umlaufende Kante (66) begrenzt ist und die umlaufende Kante der Trennwand (65) im geschlossenen Zustand des Gehäuses (1) derart mit einer Innenseite des haubenförmigen zweiten Gehäuseteil (30) zusammenwirkt, dass im Innern des ersten geschlossenen Raums (6) ein zweiter geschlossener Raum (7) zur Aufnahme von elektronischen Bauteilen (2) gebildet ist.

6. Gehäuse (1) nach Anspruch 5, **dadurch gekennzeichnet, dass** zwischen der umlaufenden Kante (66) der Trennwand (65) und dem zweiten Gehäuseteil (30) eine umlaufende zweite Dichtung (40) angeordnet ist.

7. Gehäuse (1) nach einem der vorangehenden Ansprüche, **dadurch gekennzeichnet, dass** das erste Gehäuseteil (10) im Wesentlichen plan ist und in das erste Gehäuseteil (10) eine im Wesentlichen plane Anzeige- und Bedieneinheit (20) eingebettet ist.

8. Gehäuse (1) nach einem der vorangehenden Ansprüche, **dadurch gekennzeichnet, dass** das Befestigungsmodul (60) mit mindestens einem Befestigungsmittel (70) lösbar mit dem ersten Gehäuseteil (10) verbunden ist.

9. Gehäuse (1) nach einem der vorangehenden Ansprüche, **dadurch gekennzeichnet, dass** das Befestigungsmodul (60) im Wesentlichen aus Kunststoff gefertigt ist.

10. Gehäuse (1) nach einem der vorangehenden Ansprüche, **dadurch gekennzeichnet, dass** das erste Gehäuseteil (10) und das zweite Gehäuseteil (30) im Wesentlichen aus Metall gefertigt sind.

11. Gehäuse (1) nach einem der vorangehenden Ansprüche, **dadurch gekennzeichnet, dass** das erste Gehäuseteil (10) und/oder das zweite Gehäuseteil (30) jeweils einstückig sind

12. Gehäuse (1) nach einem der vorangehenden Ansprüche, **dadurch gekennzeichnet, dass** das erste Gehäuseteil (10) und/oder das zweite Gehäuseteil (30) im Wesentlichen nahtlos ist.

13. Gehäuse (1) nach einem der vorangehenden Ansprüche, **dadurch gekennzeichnet, dass** das zweite Gehäuseteil (30) fest mit einem Ständer (3) verbunden ist und im geöffneten Zustand des Gehäuses (1) das erste Gehäuseteil (10) mit Hilfe eines Haltemoduls (100) lösbar mit dem zweiten Gehäuseteil (30) verbunden ist.

14. Gehäuse (1) nach Anspruch 13, **dadurch gekennzeichnet, dass** das Haltemodul (100) ein Verbindungselement (101) mit einer Öse (102) und einen mit der Öse (102) zusammenwirkenden Zapfen (103) aufweist und das Verbindungselement (101) an dem ersten Gehäuseteil (10) und der Zapfen (103) am zweiten Gehäuseteil (30) fixiert ist.
